# EUROPÄISCHE PATENTANMELDUNG

(11) **EP 2 458 191 A1**
(43) Veröffentlichungstag der Anmeldung: **30.05.2012**
(21) Anmeldenummer: 11190576.6
(22) Anmeldetag: 24.11.2011
(51) Int. Cl.: F02M 31/125, F02M 37/22, B01D 35/18

(54) **Heizeinrichtung**

(30) Priorität: 26.11.2010 DE 102010060835; 20.01.2011 DE 102011000246
(71) Anmelder: DBK David + Baader GmbH, 76870 Kandel (DE)
(72) Erfinder: Kochanek, Falko, 76275 Ettlingen (DE); Obst, Andreas, 76870 Kandel (DE)
(74) Vertreter: Winter, Brandl, Fürniss, Hübner, Röss, Kaiser, Polte - Partnerschaft

(57) **Zusammenfassung**

Offenbart ist eine Heizeinrichtung zur Erwärmung eines gasförmigen oder flüssigen Mediums, beispielsweise Dieselkraftstoff, bei dem eine Heizung mit zwei Kontaktplatten und zumindest einem Heizelement über ein Fixierelement vormontiert und über dieses Fixierelement in oder an einem Gehäuse befestigt sind.

## Beschreibung

Die Erfindung betrifft eine Heizeinrichtung gemäß dem Oberbegriff des Patentanspruches 1.

Derartige Heizeinrichtungen werden beispielsweise bei Dieselmotoren mit einem Filter kombiniert, so dass der Dieselkraftstoff beim Kaltstart schnellstmöglich auf Betriebstemperatur gebracht werden kann.

In der EP 1 510 685 B1 der Anmelderin ist eine Heizeinrichtung offenbart, bei der eine Heizung durch zwei etwa ringförmige Kontaktplatten ausgebildet ist, zwischen denen eine Vielzahl von Heizelementen, im vorliegenden Fall PTC-Widerstandselemente angeordnet sind. Das Gehäuse hat einen Einlass und einen Auslass für das zu erwärmende Medium, beispielsweise Diesel-Kraftstoff , der einem Innenraum des Gehäuses zugeführt bzw. aus diesem erwärmt abgeführt wird, wobei das Medium beim Durchströmen des Gehäuseinnenraums durch die Heizelemente und die damit thermisch und elektrisch kontaktierten Kontaktplatten erwärmt wird. Beim Erreichen einer vorbestimmten Temperatur, die beispielsweise über einen Thermoschalter erfasst wird, wird dann die Stromzufuhr unterbrochen oder herunter geregelt.

Die Befestigung der sandwichartigen Konstruktion aus Kontaktplatten und dazwischen liegenden scheibenförmigen Heizelementen erfolgt bei der bekannten Lösung durch eine Vielzahl von an einem Gehäuseboden abgestützten Haltestiften, die die beiden koaxial angeordneten Kontaktplatten durchsetzen, wobei die oben liegende, von dem Gehäuseboden entfernte Kontaktplatte mit Klemmzungen ausgeführt ist, die es ermöglichen, diese Kontaktplatte an den Haltestiften festzuklemmen und somit das Paket mit einer vorbestimmten Vorspannung thermisch und elektrisch zu kontaktieren. In der EP 1 510 688 B1 ist eine ähnliche Lösung gezeigt.

Die EP 1 158 158 A1 zeigt eine Lösung, bei der die Befestigung des sandwichartig aufgebauten Heizers über Klemm- oder Federscheiben erfolgt, die mit Presspassung zwischen laschenartige Haltesegmente eingepresst werden, die die beiden Kontaktbleche durchsetzen und - ähnlich wie die Haltestifte bei der eingangs beschriebenen Lösung - an einem Gehäuseboden verankert oder einstückig mit diesem ausgebildet sind.

In der EP 0 657 199 A2 ist eine Heizeinrichtung offenbart, bei der die Festlegung des Heizers mit den beiden Kontaktblechen und den dazwischen liegenden Halteelementen durch Verschrauben erfolgt. Diese durchsetzen die Bauelemente des Heizers und stehen in Gewindeeingriff mit entsprechenden Sockeln am Gehäuseboden. Bei dieser Variante durchsetzen einige der Schrauben auch die scheibenförmigen Heizelemente.

All die vorbeschriebenen Lösungen haben den Nachteil gemeinsam, dass die einzelnen Bauelemente der Heizeinrichtung, beispielsweise das Gehäuse und die beiden Kontaktbleche mit hinreichender Präzision gefertigt werden müssen, da die exakte Relativpositionierung zu den oben erläuterten Fixierelementen eingehalten werden muss, um eine hinreichende Kontaktierung zu gewährleisten. Darüber hinaus ist auch die Montage der Heizeinrichtung aufwendig, da in auf einander folgenden Schritten zunächst das bodenseitige Kontaktblech in das Gehäuse eingesetzt und dann darauf die Heizelemente und das oben liegende Kontaktblech und ggf. ein Federelement positioniert werden müssen.

Demgegenüber liegt der Erfindung die Aufgabe zugrunde, eine Heizeinrichtung zu schaffen, die auf einfache Weise montierbar und herstellbar ist.

Diese Aufgabe wird durch eine Heizeinrichtung mit den Merkmalen des Patentanspruches 1 gelöst.

Vorteilhafte Weiterbildungen der Erfindung sind Gegenstand der Unteransprüche.

Erfindungsgemäß hat die Heizeinrichtung ein Gehäuse, an dem ein Einlass und ein Auslass für ein zu erwärmendes gasförmiges oder flüssiges Medium ausgebildet sind. In diesem Gehäuse ist eine Heizung aufgenommen, die eine erste und eine zweite Kontaktplatte hat, zwischen denen etwa scheibenförmige Heizelemente angeordnet sind. Diese Heizung ist mittels zumindest eines Fixierelementes an dem Gehäuse festgelegt, wobei dieses Fixierelement oder die Fixiereinrichtung abschnittsweise die Kontaktplatten durchsetzt. Erfindungsgemäß ist dieses Fixierelement mit einer ersten und einer zweiten Anlageschulter ausgeführt, zwischen denen die Kontaktplatten und die Heizelemente lagefixierbar sind. Das Fixierelement hat des Weiteren einen Verbindungsabschnitt, der sich über das Paket aus Kontaktplatten und Heizelementen hinaus erstreckt und in eine Aufnahme des Gehäuses eingesetzt ist.

Erfindungsgemäß wird somit eine Lösung vorgeschlagen, bei der das Paket, bestehend aus dem Montageträger, den Kontaktplatten und den dazwischen angeordneten Heizelementen an dem Fixierelement lagefixierbar ist und somit vormontiert werden kann. Diese vormontierte Einheit kann dann ohne größeren Aufwand in das Gehäuse eingesetzt werden, wobei zur Befestigung am Gehäuse wiederum das Fixierelement verwendet wird. Dieses erfüllt somit eine Doppelfunktion, da es zum einen die Heizung am Gehäuse hält und zum anderen die Bauelemente der Heizung, zumindest dessen Kontaktplatten und die dazwischen liegenden Heizelemente zueinander lagefixiert. Dies ermöglicht es, die Heizung als vormontierte Einheit zwischenzulagern und bei Bedarf einzubauen, so dass die Fertigung wesentlich vereinfacht wird.

Bei einem Ausführungsbeispiel der Erfindung ist das Paket in einem Montageträger aufgenommen, an dem zumindest eine sich vom Paket weg erstreckende Federhülse ausgebildet ist, durch die hindurch sich das Fixierelement mit der ersten Anlageschulter erstreckt, so dass diese an einer Stirnfläche der Federhülse abgestützt ist.

Mit dieser Variante kann das Fixierelement bereits am Montageträger vormontiert werden, da es mittels der Federhülse gehalten wird.

Die Montage der Heizung ist vereinfacht, wenn das Paket mit den Kontaktplatten und den oder dem Heizelement in einen Montageträger aufgenommen ist, in dem das Paket mit seitlichem Spiel zum Toleranzausgleich mit Bezug zur Aufnahme des Gehäuses festlegbar ist. D.h. der Montageträger ist so ausgeführt, dass das Paket Toleranzen, die bei der Fertigung des Gehäuses auftreten können, ausgleichen kann. Auf diese Weise ist es möglich, das Gehäuse mit vergleichsweise großer Maßtoleranz auszuführen, ohne die Maßhaltigkeit der Gesamtanordnung negativ zu beeinflussen.

Eine Variante der Heizeinrichtung sieht es vor, eine Federhülse mit einer Vielzahl von Federlaschen auszuführen, die gemeinsam einen Aufnahmeraum für einen Teilbereich des Fixierelementes bilden.

Ein Toleranzausgleich ist besonders einfach, wenn die lichte Weite des durch die Federlaschen gebildeten Aufnahmeraumes deutlich größer als der Durchmesser des Fixierelementes ausgebildet ist. Dies ermöglicht es, das Fixierelement in die Aufnahme des Gehäuses einzusetzen und den Toleranzausgleich durch das radiale Spiel im Montageträger auszugleichen. Selbstverständlich ist dieses radiale Spiel so ausgelegt, dass die Relativpositionierung der Heizung mit den Kontaktblechen und den dazwischen liegenden Heizelementen in der gewünschten Weise erfolgen kann.

Eine Weiterbildung der Erfindung sieht es vor, Federlaschen einer Federhülse zum Fixierelement hin einzuziehen, so dass sie am Außenumfang des Fixierelementes anliegen.

Bei einem bevorzugten Ausführungsbeispiel der Erfindung ist das Fixierelement stiftartig ausgeführt, wobei an einem Endabschnitt die erste Anlageschulter durch eine Erweiterung ausgebildet ist, welche beispielsweise pilzförmig ausgeformt sein kann. Deren Durchmesser ist so gewählt, dass sie durch die Federhülse hindurch eingesetzt werden kann. Im Axialabstand zu dieser Anlageschulter ist ein Radialbund vorgesehen, der die zweite Anlageschulter ausbildet. An dem anderen Endabschnitt des stiftartigen Fixierelements ist der Verbindungsabschnitt zum Einsetzen in die gehäuseseitige Aufnahme ausgeführt.

Bei einem Ausführungsbeispiel der Erfindung erfolgt eine Zentrierung des Federelementes mittels eines radial zurückgesetzten Axialvorsprungs des Radialbunds, wobei das Federelement mit einer Ausnehmung den Axialvorsprung umgreift und somit zentriert ist. Bei einer vereinfachten Ausführungsform entfällt dieser Axialvorsprung, so dass das Federelement axial auf dem Radialvorsprung aufliegt und in Radialrichtung etwas verschiebbar ist. Diese Ausführungsform lässt sich deutlich einfacher montieren, da der Axialvorsprung nicht mehr mit Bezug zum Federelement ausgerichtet werden muss.

Die Anmeldering behält sich vor, auf die mit Radialspiel ausgeführte Abstützung des Federelementes einen eigenen abhängigen oder unabhängigen Anspruch zu richten.

Die Montage ist weiter vereinfacht, wenn der Verbindungsabschnitt des Fixierelementes kraft- und/oder formschlüssig in die Aufnahme eingesetzt wird. Hierzu können beispielsweise am Verbindungsabschnitt ein oder mehrere Radialvorsprünge ausgeführt werden, die eine Art Verzahnung bilden, die reib- und stoffschlüssig in die Aufnahme eingepresst wird.

Zur besseren Relativpositionierung der Heizung können an Innenumfangswandungen des Montageträgers umlaufende Auflagen für Umfangsabschnitte der Kontaktplatten ausgeführt sein, so dass diese umlaufend im Montageträger abgestützt sind.

Diese Auflagen können zur Verbesserung der Abdichtung so ausgeführt sein, dass die Anlage im Wesentlichen linienförmig erfolgen - auf diese Weise wird ein hohe "Linienpressung" beim Verspannen des Paketes erzielt, so dass die Umfangsbereiche nach außen hin abgedichtet sind.

Ein Ausführungsbeispiel der Erfindung sieht vor, die zum Verbindungsabschnitt der Fixierelemente benachbarte Kontaktplatte mit einem größeren Durchmesser als die andere Kontaktplatte auszuführen, wobei die Abstützung im Montageträger entsprechend erfolgt.

Erfindungsgemäß wird es bevorzugt, wenn die zweite Anlageschulter des Fixierelementes durch einen Radialbund gebildet ist, der an einer entsprechenden Stützfläche des Gehäuses abgestützt ist.

Gemäß einer Weiterbildung der Erfindung ist das Paket über zumindest ein Federelement zwischen den Anlageschultern des Fixierelementes verspannt.

Bei einem bevorzugten Ausführungsbeispiel sind auch die Heizelemente von jeweils einem Fixierelement durchsetzt.

Wie bereits erläutert, ist das Heizelement vorzugsweise als PTC-Widerstandselement ausgeführt.

Bevorzugte Ausführungsbeispiele der Erfindung werden im Folgenden anhand schematischer Zeichnungen näher erläutert. Es zeigen:
Figur 1 eine Draufsicht auf eine erfindungsgemäße Heizeinrichtung, die an einen Dieselfilter angesetzt wird;
Figur 2 eine Unteransicht der Heizeinrichtung aus Figur 1;
Figur 3 eine Einzeldarstellung einer Heizung der Heizeinrichtung gemäß Figur 1;
Figur 4 eine Unteransicht der Heizung gemäß Figur 3;
Figur 5 eine Explosionsdarstellung der Heizung gemäß Figur 3;
Figur 6 einen Längsschnitt entlang der Linie A-A in Figur 1;
Figur 7 einen Teilbereich der Figur 6 in vergrößerter Darstellung und
Figur 8 ein weiteres Ausführungsbeispiel einer Heizeinrichtung.

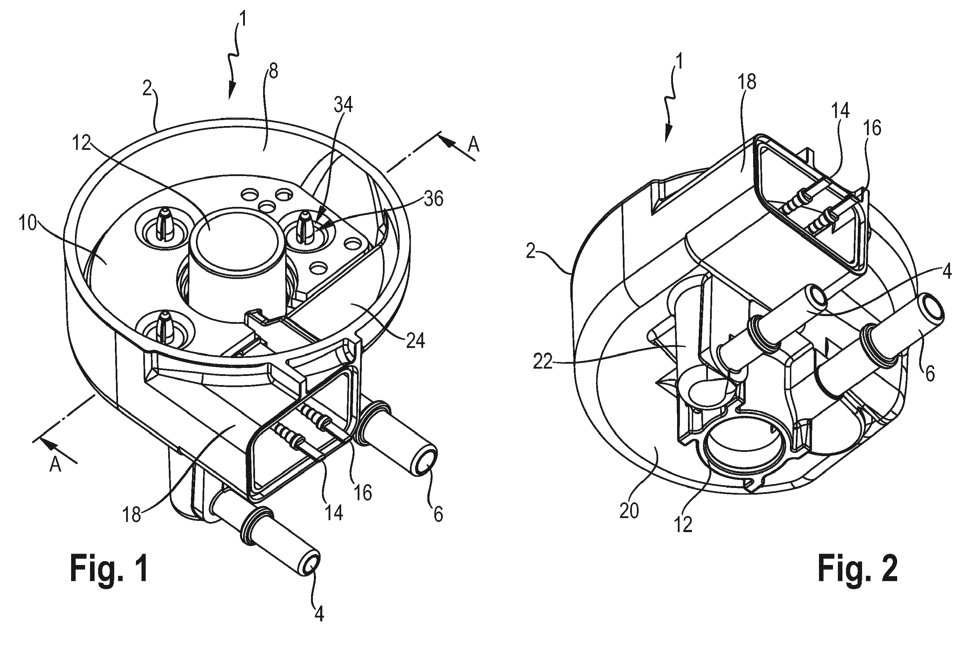

Figur 1 zeigt eine dreidimensionale Draufsicht eines Ausführungsbeispiels einer erfindungsgemäßen Heizeinrichtung 1 für einen Kraftstofffilter. Dieser ist in ein Filtergehäuse angesetzt, in das die im Folgenden näher beschriebene Heizeinrichtung integriert ist. Derartige Filter sind aus dem Stand der Technik bekannt, so dass diesbezügliche Erläuterungen entfallen können.

Die Heizeinrichtung 1 hat ein etwa topfförmiges Gehäuse 2, an dem ein Einlass 4 und ein Auslass 6 angeordnet sind. Der zu erwärmende Dieselkraftstoff tritt durch den Einlass 4 in den Gehäuseinnenraum 8 ein und wird dann über eine im Gehäuse 8 aufgenommene Heizung 10 erwärmt und durchströmt anschließend das Filterelement. Nach der Filtrierung strömt der Dieselkraftstoff axial über einen Zentralstutzen 12 und den Auslass 6 aus dem Filter ab.

Die elektrische Kontaktierung der Heizung 10 erfolgt über zwei Kontaktstifte 14, 16, die aus einer Fassung 18 für einen Stecker zur Verbindung mit dem Bordnetz etwa tangential auskragen.

Figur 2 zeigt eine Ansicht von unten auf das Gehäuse 2. Man erkennt den etwa topfförmigen Aufbau des Gehäuses 2 mit der Fassung 18, die sich etwa tangential aus einem Gehäuseboden 20 heraus erstreckt. Der zum Aufsetzen einer Schlauchleitung ausgeführte Auslass 6 mündet etwa tangential in dem über den Gehäuseboden 20 hinaus verlängerte, nach unten auskragenden Zentralstutzen 12, der nach unten hin verschlossen ist.

Der Einlass 4 mündet in einen sich ebenfalls aus dem Gehäuseboden 20 nach unten (Ansicht nach Figur 2) erstreckenden Einlassstutzen 22, der seinerseits in dem Bereich des Gehäuseinnenraums 8 mündet, in dem die Heizung 10 angeordnet ist. Das Gehäuse 2 ist als Spritzgießteil aus Kunststoff ausgeführt.

Gemäß der Draufsicht in Figur 1 hat die Heizung 10 in etwa eine Kreisringsegment-Struktur, die den Zentralstutzen 12 zumindest abschnittsweise umgreift.

Der Gehäuseinnenraum 8 ist dabei abschnittsweise von einer Trennwandung 24 unterteilt, wobei die Heizung 10 in dem größeren kreissegmentartigen Gehäuseteil angeordnet ist.

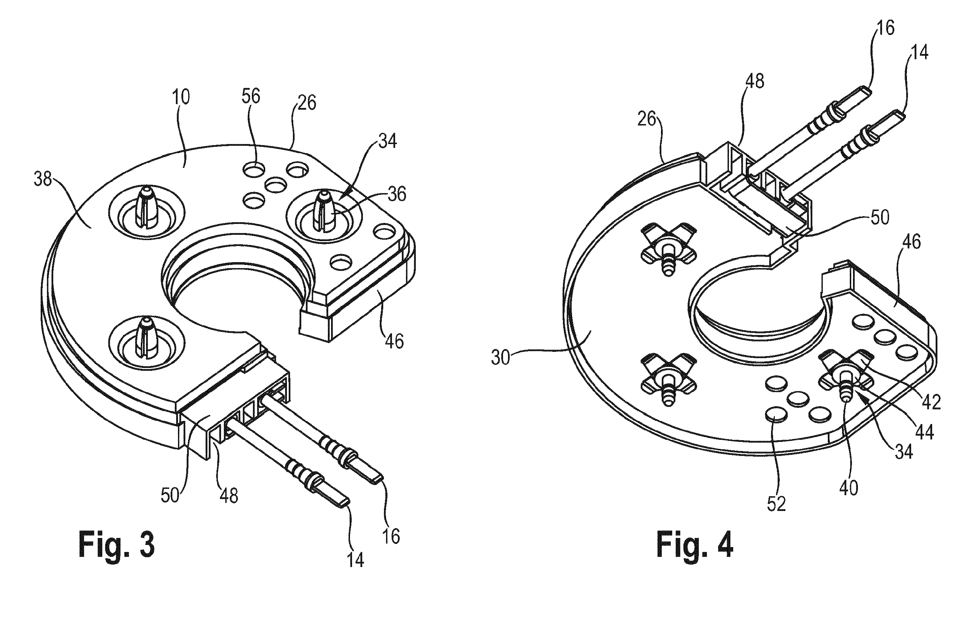

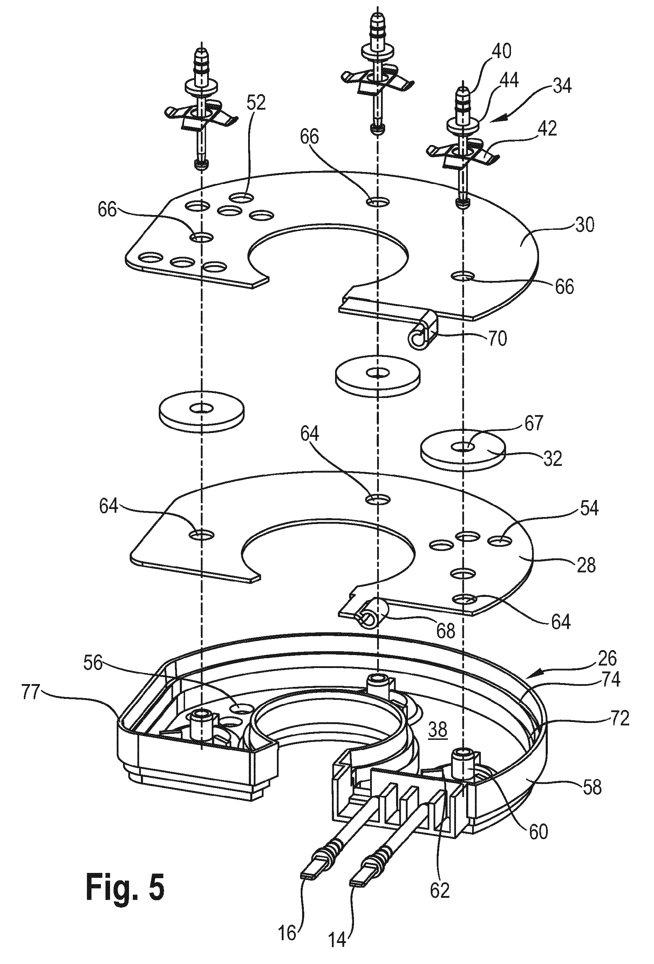

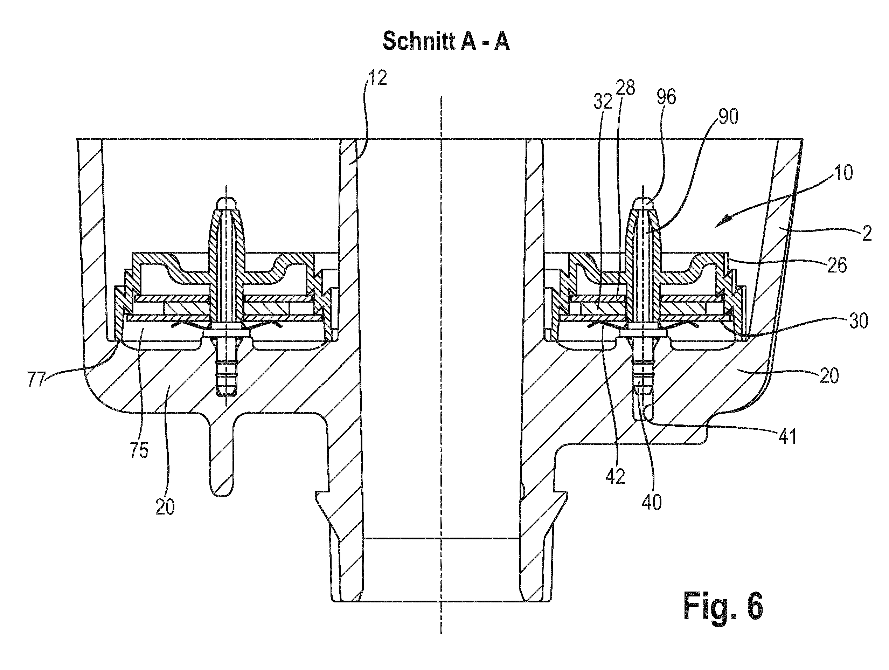

Die Figuren 3 und 4 zeigen eine Einzeldarstellung der Heizung 10. Die in den von der Trennwandung 24 abgeteilten Innenraum 8 des Gehäuses 2 eingesetzte Heizung 10 hat einen etwa omegaförmigen Aufbau mit einem Montageträger 26, in dem die eigentliche Heizung mit zwei Kontaktplatten 28, 30 und mehreren, im vorliegenden Fall drei scheibenförmigen Heizelementen, beispielsweise PTC-Widerstandselementen 32 (siehe Figur 5) aufgenommen sind. Gemäß der Darstellung in Figur 4 ist der Montageträger 26 nach unten hin offen ausgeführt, so dass die einlassseitige Kontaktplatte 30 sichtbar ist. Das Sandwichpaket mit den beiden Kontaktplatten 28, 30 und den dazwischen liegenden Heizelementen 32 erfolgt über drei stiftförmige Fixierelemente 34, die dieses Sandwichpaket durchsetzen. Die im Folgenden noch näher erläuterten Fixierelemente 34 sind mit einem Endabschnitt in Federhülsen 36 abgestützt, die sich aus einem Boden 38 des Montageträgers 26 heraus erstrecken. Die drei Fixierelemente 34 durchsetzen jeweils die beiden Kontaktplatten 28, 30 und eines der Heizelemente 32 derart, dass in Figur 4 sichtbare Verbindungsabschnitte 40 aus dem Montageträger 26 auskragen. Diese Verbindungsabschnitte werden dann in anhand Figur 6 näher erläuterte Aufnahmen 41 im Gehäuseboden 20 eingepresst. Demzufolge wird über die Fixierelemente 34 die Heizung 10 mit dem Montageträger 26, den beiden Kontaktplatten 28, 30 und den Heizelementen 32 relativ zu einander lagefixiert und verspannt und darüber hinaus dieses vormontierte Heizungspaket im Gehäuse 2 befestigt. Die Verspannung des Heizerpaktes erfolgt dabei über Federelemente 42, die jeweils an einem Radialbund 44 eines Fixierelementes 34 abgestützt sind und an der in Figur 4 sichtbaren Großfläche der Kontaktplatte 30 angreifen.

Wie besonders gut anhand der Figuren 3 und 4 erkennbar ist, hat der omegaförmige Montageträger 26 zwei Stirnflächen 46, 48, wobei die Stirnfläche 46 an der Trennwandung 24 anliegt und in der Stirnfläche 48 die beiden Kontaktstifte 14, 16 über ein Kontaktgehäuse 50 mit jeweils einer der Kontaktplatten 28, 30 kontaktiert sind.

Der Dieselkraftstoff strömt durch den Einlass 4 im Bodenbereich in das Gehäuseinnere 8 ein und tritt über Ausnehmungen 52 der Kontaktplatte 30 in den von den beiden Kontaktplatten 28, 30 begrenzten ersten Heizraum ein. Der über die Heizelemente 32 und die beiden Kontaktplatten 28, 30 erwärmte Dieselkraftstoff strömt dann über in der "oberen" Kontaktplatte 28 ausgebildete Auslassöffnungen 54 in den Raum zwischen der Kontaktplatte 28 und den Boden 38 des Montageträgers 26. Der Dieselkraftstoff strömt dann durch diesen zweiten Heizraum an der Unterseite der Kontaktplatte 28 enlang und wird weiter erwärmt. Dann fließt der Kraftstoff über entsprechende Durchbrüche 56 im Boden 38 des Montageträgers 26 aus der Heizung 10 ab hin zum Filterelement und wird dann nach der Filtrierung durch den oben angesprochenen Zentralstutzen 12 und den Auslass 6 abgeführt.

Weitere Einzelheiten der Heizung 10 werden anhand Figur 5 erläutert, die eine Explosionsdarstellung der Heizung 10 zeigt, wobei diese im gegenüber der Darstellung in Figur 1 um 180° verdreht ist. Man erkennt den dann nach oben offenen Montageträger 26 mit einer omegaförmigen Umfangswandung 58, die den Boden 38 umgreift.

Aus dem Boden 38 stehen nach oben hin (Ansicht nach Figur 5) drei auf dem gleichen Teilkreis wie die Fixierelemente 34 liegende Zentriersockel 60 vor, die in Verlängerung der aus dem Boden 38 nach unten (nicht sichtbar in Figur 5) auskragenden Federhülsen 36 angeordnet sind.

Im Bereich um die Zentriersockel 60 ist am Boden 38 noch eine Vielzahl von etwa radial dazu angeordneten Stützstegen 62 vorgesehen. Die Kontaktplatte 28 hat drei Montageausnehmungen 64, die auf dem gleichen Teilkreisdurchmesser wie die Zentriersockel 60 liegen und die in der Montageposition jeweils von einem der Zentriersockel 60 durchsetzt sind. In entsprechender Weise hat auch die weitere Kontaktplatte 30 drei auf einem entsprechenden Teilkreis liegende Montageausnehmungen 66, die im montierten Zustand von den Zentriersockeln 60 durchsetzt sind. Die drei Heizelemente 32 sind jeweils mit einem mittigen Durchbruch 67 versehen, so dass die Zentriersockel 60 auch die Heizelemente 32 durchsetzen.

An den beiden in Figur 5 rechts angeordneten Stirnseiten der omegaförmigen Kontaktplatten 28, 30 ist jeweils durch Stanzbiegen eine Kontaktöse 68, 70 ausgebildet, die mit dem entsprechenden Kontaktstift 14, 16 kontaktiert ist, so dass bei einer Verbindung mit dem Bordnetz und entsprechender Ansteuerung die Heizelemente 32 bestromt oder strom los geschaltet werden.

An der Umfangswandung 58 des Montageträgers 26 sind stufenförmig umlaufende Auflagen 72, 74 ausgebildet, auf denen die Kontaktplatte 28 bzw. die Kontaktplatte 30 mit ihren Umfangsabschnitten aufliegt. Wie der Darstellung gemäß Figur 5 entnehmbar ist, ist die Umfangswandung 58 durch die umlaufenden Auflagen 72, 74 zum Boden 38 hin stufenförmig verengt, so dass entsprechend die bodenseitige Kontaktplatte 28 einen etwas geringeren Durchmesser als die in Figur 5 oben liegende Kontaktplatte 30 aufweist.

Figur 6 zeigt einen Schnitt entlang der Linie A-A in Figur 1. Aus dieser Darstellung erkennt man sehr gut die Einbaulage der Heizung 10 mit Bezug zum Gehäuse 2. In dieser Darstellung überdeckt der Montageträger 26 das Paket aus den beiden Kontaktplatten 28, 30 und den dazwischen liegenden Heizelementen 32. Dabei liegt er mit einer Stirnkante 77 glockenartig auf einer Schulter des Gehäuses 2 auf, so dass ein zwischen dem Gehäuseboden 20 und der Kontaktplatte 30 ein Einlassraum 75 begrenzt wird, in den der Dieselkraftstoff einströmt. Der Verbindungsabschnitt 40 der Fixierelemente 34 ist, wie eingangs erläutert, in Aufnahmen 41 des Gehäusebodens 20 eingepresst, so dass die Heizung 10, die als vormontierte Einheit geliefert werden kann, zuverlässig mit dem Gehäuse 2 verbunden ist. In der Darstellung gemäß Figur 6 erkennt man den Zentralstutzen 12, der von der Heizung 10 umgriffen ist und der sich durch den Gehäuseboden 20 hindurch erstreckt.

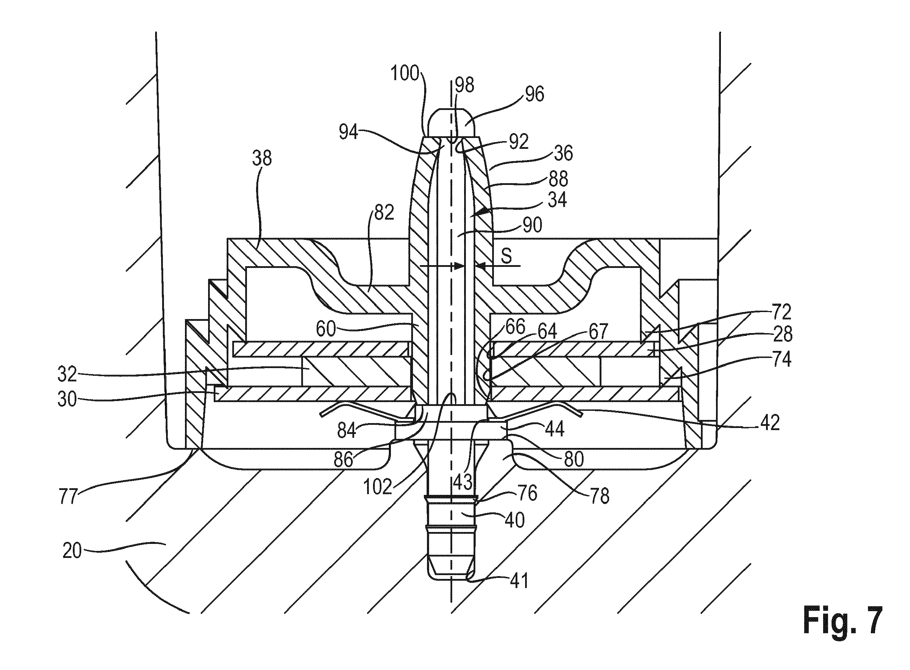

Wie sich insbesondere aus der vergrößerten Detaildarstellung gemäß Figur 7 ergibt, sind am Außenumfang des zapfenförmigen Verbindungsabschnittes 40 zwei scharfkantige, tannenbaumartige Radialvorsprünge 76 ausgebildet, die sich beim Einpressen dieses Verbindungsabschnittes 40 in die Umfangswandung der Aufnahme 42 eingraben und somit für eine kraft- und formschlüssige Verbindung der Heizung 10 mit dem Gehäuseboden 20 sorgen. Gemäß der Darstellung in Figur 7 ragt im Bereich jeder Aufnahme 42 aus dem Gehäuseboden 20 ein Stützbund 78 hervor, der eine Stützfläche 80 ausbildet, auf der der Radialbund 44 des stiftförmigen Fixierelementes 34 aufliegt. Das Federelement 42 ist von dem in Figur 7 oben liegenden Endabschnitt des Fixierelementes 34 durchsetzt, liegt an der von der Stützfläche 80 entfernten Stirnfläche des Radialbundes 44 auf und greift an der benachbarten Kontaktplatte 30 an, so dass diese gegen die zugeordnete Auflage 74 vorgespannt ist. Darüber hinaus wird die Kontaktplatte 30 über das dazwischen liegende Heizelement 32 gegen die Kontaktplatte 28 vorgespannt, so dass diese gegen die obere Auflage 72 gepresst wird. Beide Auflagen 72, 74 sind mit einer schräg angestellten Schulter ausgeführt, so dass sich lediglich ein linienförmiger Anlagebereich zwischen den Kontaktplatten 28, 30 und der zugeordneten Auflage 72, 74 ergibt. Diese linienförmige Anlage gewährleistet eine gute Abdichtung im Umfangsbereich der beiden Kontaktplatten 28, 30.

Gemäß der vergrößerten Darstellung in Figur 7 kragt der Zentriersockel 60 nach unten aus einer Sicke 82 des Montageträgers 26 aus und durchsetzt die Montageausnehmungen 64 und 66 der Kontaktplatten 28 und 30 sowie den Durchbruch 67 des Heizelementes 32 so, dass diese zentriert sind. Eine in Figur 7 unten liegende Ringstirnfläche 84 des Zentriersockels 60 sitzt auf einem Axialvorsprung 86 des Radialbundes 44 auf. In Verlängerung des Zentriersockels 60 ist die eingangs beschriebene Federhülse 36 ausgebildet, die von dem oben liegenden Endabschnitt des Fixierelementes 34 durchsetzt ist.

Wie insbesondere aus der Darstellung in Figur 3 hervorgeht, hat die Federhülse 36 drei Federlaschen 88, von denen in Figur 7 lediglich zwei sichtbar sind. Diese Federlaschen 88 umgreifen gemeinsam mit dem koaxial zur Federhülse 36 ausgebildeten Zentriersockel 60 einen Teilbereich des Fixierelementes 34. Der Innendurchmesser des Zentriersockels 60 und der Federlaschen 88 ist deutlich größer als der Außendurchmesser eines Pinabschnittes 90 des Fixierelementes 34 ausgebildet, so dass sich ein Spiel S ergibt, mit dem der Pinabschnitt 90 in Radialrichtung innerhalb des von den elastischen Federlaschen 88 und dem Zentriersockel 60 umgriffenen Raums verschiebbar ist.

Die in Figur 7 oben liegenden Endabschnitte der drei Federlaschen 88 sind dann zum Pinabschnitt 90 hin eingezogen, so dass sie jeweils mit ihren Innenumfangskanten 92 an dem Außenumfang des Pinabschnittes 90 angreifen. In diesem Bereich kann der Pinabschnitt 90 mit einer Einschnürung 94 versehen sein. Der Pinabschnitt 90 erstreckt sich durch die Federhülse 36 hindurch und hat an seinem Ende eine pilzförmige Erweiterung 96, die eine Anlageschulter 98 ausbildet, die auf einer Stirnfläche 100 der Federhülse 36 aufliegt. Der Durchmesser der Erweiterung entspricht etwa der lichten Weite der Federhülse 36, so dass der Pinabschnitt 90 von unten (Fig. 7) in die Federhülse eingesetzt werden kann. Der Zentriersockel 60 und die sich daran anschließende Federhülse 36 erstreckt sich somit im Bereich zwischen der Anlageschulter 98 der Erweiterung 96 und einer weiteren Anlageschulter 102, die durch die Ringstirnfläche des Axialvorsprungs 86 des Radialbunds 44 ausgebildet ist - das Fixierelement 34 ist somit in Axialrichtung spielfrei gelagert - in Radialrichtung kann das Fixierelement 34 aufgrund der Federwirkung der Federlaschen 88 und des Spiels S verschoben werden. Dieses Spiel ermöglicht es, eventuelle Fertigungstoleranzen bei der Ausbildung der Aufnahmen 41 im Gehäuseboden 20 auszugleichen, so dass das Gehäuse 2 mit relativ großen Toleranzen und somit sehr preiswert gefertigt werden kann, ohne dass eine Nachbearbeitung erforderlich ist.

Durch die in Axialrichtung spielfreie Aufnahme des Fixierelementes 34 im Montageträger 26 ist auch stets eine hinreichende Vorspannung und Kontaktierung der Bauelemente des Heizers, d.h. im Wesentlichen der Kontaktplatten 28, 30 und der dazwischen liegenden Heizelemente 32 gewährleistet.

Beim beschriebenen Ausführungsbeispiel können die Kontaktplatten 28, 30 beispielsweise aus Zinnbronze, einer Aluminiumlegierung oder einem ähnlichen leitenden Material hergestellt sein. Das Gehäuse 2 und der Montageträger 26 sind als Spritzgussteile ausgeführt. Das Fixierelement 34 wird vorzugsweise aus Edelstahl oder dergleichen ausgebildet. Die Federelemente 42 bestehen aus einem geeigneten Federstahl, der auch bei den auftretenden Temperaturen eine hinreichende Vorspannung ermöglicht.

Bei der Montage der vorbeschriebenen Heizeinrichtung müssen nach dem Einsetzen der beiden Kontaktplatten 28, 30 und der PTC-Heizelemente 32 in den Montageträger 26 die Federelemente 42 zusammen mit den Fixierelementen 34 positioniert und montiert werden. Dabei kann es vorkommen, dass es bei einer Fehlstellung, in der die Ringstirnfläche 84 des Fixierelementes 34 nicht exakt axial durch einen Durchbruch 43 (siehe Figur 7) des Federelementes 42 taucht, die Einheit nicht einfach montierbar ist.

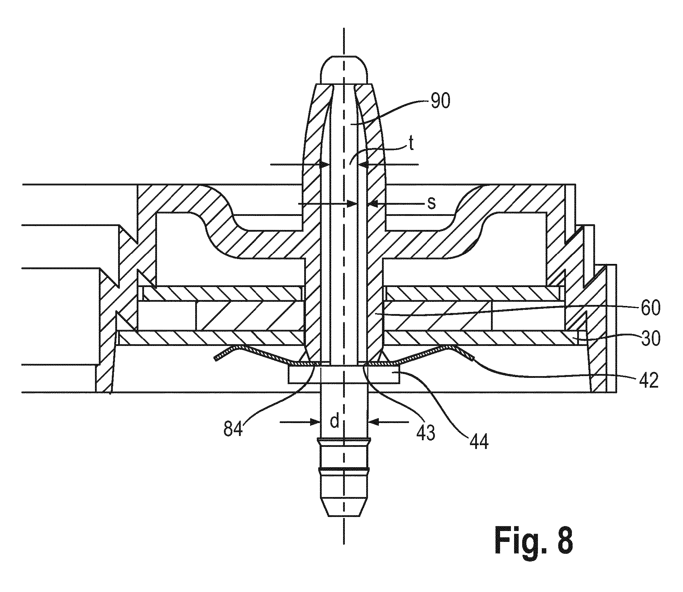

Figur 8 zeigt eine Variante, bei der diese Fehlpositionierung und die damit einhergehenden Schwierigkeiten bei der Montage ausgeräumt sind. Bei dieser Variante ist der Zentriersockel 60 in Axialrichtung etwas weiter als beim zuvor beschriebenen Ausführungsbeispiel über die untere Kontaktplatte 30 (Figur 8) verlängert und liegt mit seiner Ringstirnfläche 84 direkt auf dem Federelement 42 und nicht - wie beim zuvor beschriebenen Ausführungsbeispiel - auf der Anlageschulter 102 eines Axialvorsprungs des Radialbunds 44 auf. Dieser beim Ausführungsbeispiel gemäß Figur 7 vorhandene Axialvorsprung 86 ist bei der Variante gemäß Figur 8 entfallen, wobei allerdings der Durchmesser d des Durchbruchs 43 deutlich kleiner als der Außendurchmesser der Ringstirnfläche 84 ausgebildet ist, so dass diese entsprechend flächig auf dem Federelement 42 aufliegt. Wie beim zuvor beschriebenen Ausführungsbeispiel ist der Außendurchmesser t des Pinabschnitts 90 deutlich kleiner als der Innendurchmesser der Federhülse 36 und somit auch kleiner als der Durchmesser d des Durchbruchs 34 des Federelements 42 ausgeführt, so dass dessen Radialspiel mit Bezug zum Pinabschnitt 90 größer als das vorbeschriebene Spiel S ist. Auf diese Weise ist es nicht zwangsweise erforderlich, die Ringstirnfläche 84 axial zum Durchbruch 43 exakt auszurichten, so dass die Montage deutlich vereinfacht ist.

Offenbart ist eine Heizeinrichtung zur Erwärmung eines gasförmigen oder flüssigen Mediums, beispielsweise Dieselkraftstoff, bei dem eine Heizung mit zwei Kontaktplatten und zumindest einem Heizelement über ein Fixierelement vormontiert und über dieses Fixierelement in oder an einem Gehäuse befestigt sind.

### Bezugszeichenliste:

- 1: Heizeinrichtung
- 2: Gehäuse
- 4: Einlass
- 6: Auslass
- 8: Gehäuseinnenraum
- 10: Heizung
- 12: Zentralstutzen
- 14: Kontaktstift
- 16: Kontaktstift
- 18: Fassung
- 20: Gehäuseboden
- 22: Einlassstutzen
- 24: Trennwandung
- 26: Montageträger
- 28: Kontaktplatte
- 30: Kontaktplatte
- 32: Heizelement
- 34: Fixierelement
- 36: Federhülse
- 38: Boden
- 40: Verbindungsabschnitt
- 41: Aufnahme
- 42: Federelement
- 43: Durchbruch
- 44: Radialbund
- 46: Stirnfläche
- 48: Stirnfläche
- 50: Kontaktgehäuse
- 52: Ausnehmung
- 54: Auslassöffnung
- 56: Durchbruch
- 58: Umfangswandung
- 60: Zentriersockel
- 62: Stützsteg
- 64: Montageausnehmung
- 66: Montageausnehmung
- 67: Durchbruch
- 68: Kontaktöse
- 70: Kontaktöse
- 72: Auflage
- 74: Auflage
- 75: Einlassraum
- 76: Radialvorsprung
- 77: Stirnkante
- 78: Stützbund
- 80: Stützfläche
- 82: Sicke
- 84: Ringstirnfläche
- 86: Axialvorsprung
- 88: Federlasche
- 90: Pinabschnitt
- 92: Innenumfangskante
- 94: Einschnürung
- 96: Erweiterung
- 98: Anlageschulter
- 100: Stirnfläche
- 102: Anlageschulter

## Patentansprüche

1. Heizeinrichtung zur Erwärmung eines gasförmigen oder flüssigen Mediums mit einem Gehäuse (2), an dem ein Einlass (4) und ein Auslass (6) für das Medium ausgebildet ist und in dem eine Heizung (10) aufgenommen ist, die eine erste und eine zweite Kontaktplatte (28, 30) hat, zwischen denen zumindest ein etwa scheibenförmiges Heizelement (32) angeordnet ist, wobei die Heizung (10) mittels zumindest eines Fixierelementes (34) am Gehäuse (2) festgelegt ist, das die Kontaktplatten (28, 30) durchsetzt, **dadurch gekennzeichnet, dass** das Fixierelement (34) eine erste und eine zweite Anlageschulter (98, 102) hat, zwischen denen das Paket aus Kontaktplatten (28, 30) und Heizelement (32) lagefixierbar ist und dass sich ein Verbindungsabschnitt (40) des Fixierelements (34) über das Paket hinaus erstreckt und in eine Aufnahme (41) des Gehäuses (2) einsetzbar ist.

2. Heizeinrichtung nach Patentanspruch 1, wobei das Paket in einem Montageträger (26) aufgenommen ist, der mit seitlichem Spiel (S) zum Toleranzausgleich an den Aufnahmen (42) des Gehäuses (2) festlegbar ist.

3. Heizeinrichtung nach Patentanspruch 2, wobei am Montageträger (26) zumindest eine sich vom Paket weg erstreckende Federhülse (36) ausgebildet ist, durch die hindurch sich das Fixierelement (34) mit der ersten Anlageschulter (98) erstreckt, so dass diese an einer Stirnfläche (100) der Federhülse (34) abgestützt ist.

4. Heizeinrichtung nach Patentanspruch 3, wobei die Federhülse (36) eine Vielzahl von Federlaschen (88) hat, die gemeinsam einen Aufnahmeraum für einen Teilabschnitt des Fixierelementes (34) ausbilden.

5. Heizeinrichtung nach Patentanspruch 4, wobei die lichte Weite des Aufnahmeraumes größer als der Durchmesser des Teilbereiches (90) des Fixierelementes (34) ist.

6. Heizeinrichtung nach Patentanspruch 5, wobei Endabschnitte der Federlaschen (88) zum Fixierelement (34) hin eingezogen sind, so dass sie an dessen Außenumfang anliegen.

7. Heizeinrichtung nach einem der vorhergehenden Patentansprüche, wobei das Fixierelement (34) stiftförmig ausgebildet ist, wobei an einem Endabschnitt eine die erste Anlageschulter (98) ausbildende pilzförmige Erweiterung (96) vorgesehen ist und im Axialabstand dazu ein die zweite Anlageschulter (102) ausbildender Radialbund (44) vorgesehen ist, an den sich der Verbindungsabschnitt (40) anschließt.

8. Heizeinrichtung nach Patentanspruch 7, wobei der Verbindungsabschnitt (40) kraft- und/oder formschlüssig in die Aufnahme (41) eingesetzt ist.

9. Heizeinrichtung nach Patentanspruch 8, wobei der Verbindungsabschnitt (40) Radialvorsprünge (76) zur Verzahnung hat.

10. Heizeinrichtung nach Patentanspruch 2 oder einem der auf Patentanspruch 2 bezogenen Ansprüche, wobei der Montageträger (26) an einer Umfangswandung (58) umlaufende Auflagen (72, 74) für Umfangsabschnitte der Kontaktplatten (28, 30) hat.

11. Heizeinrichtung nach Patentanspruch 10, wobei die Auflageabschnitte (72, 74) zur Abdichtung etwa linienförmig ausgebildet sind.

12. Heizeinrichtung nach einem der vorhergehenden Patentansprüche, wobei die verbindungsabschnittsseitige Kontaktplatte (30) einen größeren Durchmesser als die andere Kontaktplatte (28) aufweist und der Montageträger (26) mit entsprechenden Auflagen (72, 74) ausgeführt ist.

13. Heizeinrichtung nach einem der vorhergehenden Patentansprüche, wobei ein die zweite Anlageschulter (102) bildender Radialbund (44) auf einer Stützfläche (80) des Gehäuses (2) abgestützt ist.

14. Heizeinrichtung nach einem der vorhergehenden Patentansprüche, wobei das Paket mittels zumindest eines Federelementes (42) vorgespannt ist, das seinerseits an einer Anlageschulter (102) oder einem diese ausbildenden Radialbund (44) abgestützt ist.

15. Heizeinrichtung nach einem der vorhergehenden Patentansprüche, wobei das Fixierelement (34) ein Heizelement (32) durchsetzt.
